# EUROPÄISCHE PATENTANMELDUNG

(11) **EP 1 335 625 A1**
(43) Veröffentlichungstag der Anmeldung: **13.08.2003**
(21) Anmeldenummer: 02002912.0
(22) Anmeldetag: 09.02.2002
(51) Int. Cl.: H04Q 9/00

(54) **Verfahren zum Messen und Messanordnung hierfür**

(71) Anmelder: Securiton AG, CH-3052 Zollikofen (CH)
(72) Erfinder: Bill, Markus, 3084 Wabern (CH); Brugger, Stefan, 3054 Schüpfen (CH)
(74) Vertreter: Révy von Belvárd, Peter

(57) **Zusammenfassung**

Bei einem Verfahren zum Messen eines ersten Parameters an unterschiedlichen Orten mit Hilfe einer linearen Messanordnung, insbesondere mit einer Vielzahl von untereinander verbundenen ersten Messeinheiten (16.0-16.8), deren erste, einen ersten Parameter wiedergebenden Messignale über einer gemeinsame Steuer- und Auswerteeinheit (17) auswertbar sind, wird auch noch mindestens ein zweiter, brandunabhängiger und die Messbedingungen bzw. Auslösekriterien der ersten Messeinheiten beeinflussender Parameter gemessen und mit den ersten Messignalen verknüpft. Zu diesem Zweck ist vorteilhaft eine Messanordnung mit einer Vielzahl von untereinander verbundenen ersten Messeinheiten (16.0-16.8) vorgesehen, deren erste, einen ersten Parameter wiedergebenden Messignale einer gemeinsamen Steuer- und Auswerteeinheit (17) zuführbar sind. Mindestens eine zweite Messeinheit (8, 9, 11, 19, 20, 22) ist zur Bestimmung des zweiten, brandunabhängigen und die Messbedingungen der ersten Messeinheiten (16.0-16.8) beeinflussenden Parameters mit der Steuer- und Auswerteeinheit (17) verknüpft.

## Beschreibung

Die Erfindung bezieht sich auf ein Verfahren nach dem Oberbegriff des Anspruches 1 sowie auf eine Messanordnung zur Durchführung des Verfahrens mit den Oberbegriffsmerkmalen des Anspruches 5. Unter dem Begriff "lineare Messanordnung" soll dabei eine langgestreckte Messanordnung, wie ein Glasfaserkabel oder - wie bevorzugt - ein mit Sensoren bestücktes Sensorkabel verstanden werden.

Verfahren der eingangs genannten Art sind aus den verschiedensten Schriften bekannt geworden, beispielsweise aus der DE-C-30 25 837, der DE-C-36 22 800 oder der WO 90/01245. Im allgemeinen handelt es sich dabei um sogenannte Sensorkabeln, bei denen, beispielsweise Temperatursensoren, entlang eines zu verlegenden Kabels in Abständen angeordnet sind und mittels einer Steuer- und Auswertestation in Form eines Prozessors hinsichtlich der von ihnen gemessenen Werte abgefragt werden. Damit kann beispielsweise die Temperaturentwicklung entlang eines Tunnels, in grösseren Gebäuden oder Fabriksanlagen überwacht und der Ausbruch eines Brandes frühzeitig gemeldet werden.

An dieser Stelle sei jedoch erwähnt, dass die vorliegende Erfindung nicht auf die Verwendung solcher Sensorkabeln beschränkt ist, obwohl sie bevorzugt verwendet werden. So könnten die Messeinheiten jeweils parallel mit einer Umschaltzentrale verbunden sein, über die die Einspeisung ihrer Messwerte an die Steuer- und Auswerteeinrichtung, beispielsweise über einen Bus, erfolgt. Auch können die Sensoren vielfältiger Art sein, beispielsweise von Messeinheiten für das Erdmagnetfeld in der Weise gebildet sein, wie es in der EP-A-0 829 736 beschrieben ist.

In der Praxis hat sich gezeigt, dass die Messungen mit Hilfe solcher bekannter Einrichtungen nicht immer genügend zuverlässig sind. Es soll ja ebenso vermieden werden, dass etwa ein Feueralarm durch zufällig auftretende Temperaturunterschiede ausgelöst wird, wie auch, dass ein sich entwickelnder Brand zu spät bemerkt wird.

Dazu kommt, dass unter Umständen die zu treffenden Massnahmen davon abhängen, von welcher Anzahl von zu rettenden oder sonstwie die Abwehrmassnahmen beeinflussenden "Objekten" (im weitesten Sinne, also sowohl Mensch, Tier als auch Einrichtungen, wie Maschinen umfassend) das überwachte Gebiet besetzt ist. Denn bei einem Brand in einem Gebäude ist natürlich in erster Linie auf die Rettung der darin befindlichen Personen Bedacht zu nehmen, wogegen bei einem leer stehenden Gebäude (oder etwa einem Tunnel) die Löschmassnahmen Vorrang haben. Zwar ist in den EP-A-1124209 und 1124210 schon vorgeschlagen worden, die Aktivität eines Menschen im überwachten Raum festzustellen, doch blieb dabei die Anzahl der zu rettenden Personen unberücksichtigt.

Der Erfindung liegt die Erkenntnis zu Grunde, dass die beobachteten Messungenauigkeiten weniger auf Fehler in der Ausbildung der Messeinheiten zurückzuführen sind, als auf die Einflüsse von Störfaktoren, die in mannigfacher Weise die Messergebnisse der Messeinheiten verfälschen können. Beispielsweise kann bei einer im Freien aufgebauten Industrieanlage die Sonneneinstrahlung sich in Form einer übermässigen Temperatursteigerung auswirken, die sich zu der im Betrieb der Anlage auftretenden Temperatur hinzuaddiert und so den Anschein einer gefährlichen Temperaturentwicklung auf Grund des Betriebes der Anlage hervorruft. Hier handelt es sich also um brandunabhängige physikalisch-atmosphärische Faktoren, welche das Messergebnis selbst und/oder seine Auslösekriterien zu beeinflussen vermögen.

Eine andere beobachtete Störeinwirkung, ebenfalls physikalischer und brandunabhängiger Art, kann von durch einen überwachten Tunnel fahrenden Lastkraftwagen mit aufwärts gerichtetem Auspuffrohr herrühren, welches beim Vorbeifahren an den - meist oben angebrachten - Temperatursensoren im Vorüberfahren eine kurzzeitige Temperaturerhöhung bewirkt und so einen Alarm auslösen kann. Gerade in Tunnels ergibt sich oft ein Luftzug, der seinerseits durch seine Kühlwirkung wiederum stark geeignet ist, den Eindruck einer tieferen Temperatur zu erwecken, als dies tatsächlich der Fall ist. Dasselbe ereignet sich bei starker (verdunstender) Feuchtigkeit.

Verschiedene Unfälle in Tunnels haben gezeigt, dass eine einzige Tunnelröhre zu gefährlichen Situationen führen kann und deshalb eine zweite Tunnelröhre als Rettungstunnel vorzusehen ist. Der Rettungstunnel ist dann mit dem Haupttunnel über Quertüren in Verbindung, welche normalerweise geschlossen sind, in gewissen Fällen aber leicht geöffnet werden können. Auch hier kann sich ein Messfehler dadurch ergeben, dass bei offenen Türen die Messverhältnisse anders sind als bei geschlossenen.

Es wurde oben bereits auf den Einfluss von "Objekten" hingewiesen. Ein Messfehler kann sich etwa in Tunnels auch dadurch ergeben, dass eine grosse Anzahl hintereinanderfahrender Autos oder gar Lastkraftwagen oder ein durch den Tunnel fahrender Zug eine Luftsäule mit einer anderen Messtemperatur vor sich hertreiben, als sie dahinter herrscht.

Der Erfindung liegt daher - in einem ersten Schritt ausgehend von den obigen Erkenntnissen - in einem zweiten Schritt die Aufgabe zugrunde, solche Störfaktoren in Echtzeit für die Messung auszuschalten, die Messungen sicherer zu machen und Fehlalarme zu vermeiden. Dies gelingt erfindungsgemäss durch ein Verfahren mit den kennzeichnenden Merkmalen des Anspruches 1 und eine Messanordnung mit dem Kennzeichen des Anspruches 6. Auf diese Weise wird vor allem der Einfluss von Störgrössen aus der Messung eliminiert. Der Begriff "Auslösekriterien" ist dabei natürlich in seinem allgemeinsten Sinn zu verstehen. Es ist aber auch möglich, wie dies vor allem in Anspruch 8 zum Ausdruck gebracht wird, durch Erfassung der zu rettenden Objekte bzw. Personen die Rettungsmassnahmen entsprechend darauf abzustellen. Dabei ist es zwar bevorzugt, wenn der zweite Parameter auch über die lineare Messanordnung erfasst wird, weil sich dann gegebenenfalls die Abfrage und Auswertung vereinfacht, doch ist es im Rahmen der Erfindung an sich unerheblich, ob dieselbe Signalleitung oder eine andere verwendet wird. Beispielsweise wäre es möglich, zwei Glasfaser- oder Kupferkabeln etwa parallel zueinander zu führen und mit dem einen die Temperatur, mit dem anderen den zweiten Parameter zu messen.

Vor allem beeinflussen die Luftfeuchtigkeit und die Windgeschwindigkeit, also kühlende Umweltbedingungen, das Messergebnis sehr stark, weshalb es gemäss einer Weiterbildung der Erfindung bevorzugt ist, wenn der zweite Parameter eine Feuchtigkeitsund/oder eine Luftgeschwindigkeitsinformation beinhaltet. Vorteilhaft werden beide Informationen gewonnen und, gegebenenfalls über einen vorbestimmten Algorithmus miteinander verknüpft, für die Auswertung der Messwerte der ersten Messeinheiten herangezogen. Wenn dabei von einem "Algorithmus" die Rede ist, so kann dieser zwar an sich - je nach Lage und Art des zu überwachenden Bauwerkes oder Fabriksanlage - recht verschieden sein, doch ist es aus den USA bekannt, beide Faktoren mit der Temperatur zum sogenannten "Chill-Faktor" zu verknüpfen, der oft zusammen mit den Wettertemperaturangaben bekannt gegeben wird.

Dass der Wind auch bei Glasfaserkabeln eine Rolle spielt, ist bereits erkannt worden, wie die EP-A-1 122 700 zeigt. Allerdings ging man zur Lösung des Problems einen anderen Weg: Es wurde in Labor- und Grossmassstabsversuchen ein Simulationsprogramm erstellt, um den Installationsort und die Alarmgrenzwerte zu "optimieren", d.h. auf eine Echtzeitbeeinflussung des Messergebnisses nach den aktuellen Gegebenheiten wurde zugunsten eines ein für alle Mal erstellten Simulationsprogrammes verzichtet. Allerdings ist die Ermittlung von Stör- und dgl. Faktoren bei Verwendung von Glasfasern sowieso recht fragwürdig, weil bei diesen erst umständlich an Hand von Streuungsfaktoren Rückschlüsse auf den Ort und die Stärke einer Brandentwicklung Rückschlüsse gezogen werden müssen, die nicht immer gelingen.

Im Falle einer Vorgangsweise nach Anspruch 3 wird beispielsweise die Temperatur in herkömmlicher Weise überwacht, gleichzeitig aber auch die Temperatur einer Störquelle, etwa der Sonneneinstrahlung oder einer anderen Wärmestrahlung zur Korrektur gemessen.

In der Tat kann die Erfindung beispielsweise so ausgeführt werden, dass dann nicht der Messwert der ersten Messeinheiten wiedergegeben wird, sondern dieser erst einer Korrektur durch den zweiten gemessenen Parameter unterzogen wird. Bevorzugt ist es allerdings, wenn den ersten Messignalen mindestens eine Toleranzgrenze zugeordnet wird, und dass das Verhältnis der ersten Messignale zur Toleranzgrenze von der Messung des zweiten Parameters bestimmt wird. Die Toleranzgrenze soll eine Alarmauslösung bei nur geringen Messunterschieden verhindern. Wie das Verhältnis der ersten Messignale zur Toleranzgrenze dann eingestellt wird, kann auf zweierlei Art geschehen: Entweder wird die Messcharakteristik derart durch den zweiten Parameter verändert, dass die Messwerte - gegenüber der an sich gleichbleibenden Toleranzgrenze - erhöht werden. Beispielsweise können die Erhöhungen einer Temperatur logarithmisch oder exponentiell mit steigender Temperatur vergrössert werden. Oder die Messwerte bleiben gleich (z.B. linear), aber die Toleranzgrenze wird durch den zweiten Parameter verändert. Natürlich ist auch eine Kombination beider Massnahmen möglich.

Um Messfehler durch eine grosse Anzahl von Kraftfahrzeugen oder einen Zug zu verhindern bzw. um die bei einem Alarm zu treffenden Gegenmassnahmen besser ausrichten zu können, ist es vorteilhaft, wenn in einer erfindungsgemässen Messanordnung die zweite Messeinheit mindestens einen Anwesenheitssensor umfasst. Ein solcher Anwesenheitssensor kann beispielsweise von einer zählenden Lichtschranke gebildet sein, wie sie in Fachkreisen an sich bekannt ist, gerade bei Tunnels wird sie aber bevorzugt von induktiven Schlaufen oder - noch bevorzugter - von einem Detektor nach der EP-A-0 829 736 gebildet, der beispielsweise mindestens vor einem Tunnel (oder Gebäude, wie Parkhaus), zweckmässig aber auch in einer zweiten Ausführung auch nach dem Tunnel, angeordnet ist.

Weitere Einzelheiten der Erfindung ergeben sich aus der Beschreibung von an Hand der Zeichnung erläuterten Ausführungsbeispielen. Es zeigen:
- Fig. 1: einen teilweisen Aufriss durch einen von zwei nebeneinander laufenden Tunnel-röhren in einer ähnlichen Anordnung, wie sie aus der DE-A-199 25 722 bekannt geworden ist, und an der die Erfindung zur Anwendung kommen soll;
- Fig. 2: eine mögliche Schaltung gemäss der Erfindung; und
- Fig. 3: ein sich unter Umständen ergebendes Anzeige-Diagramm für die Messwerte.

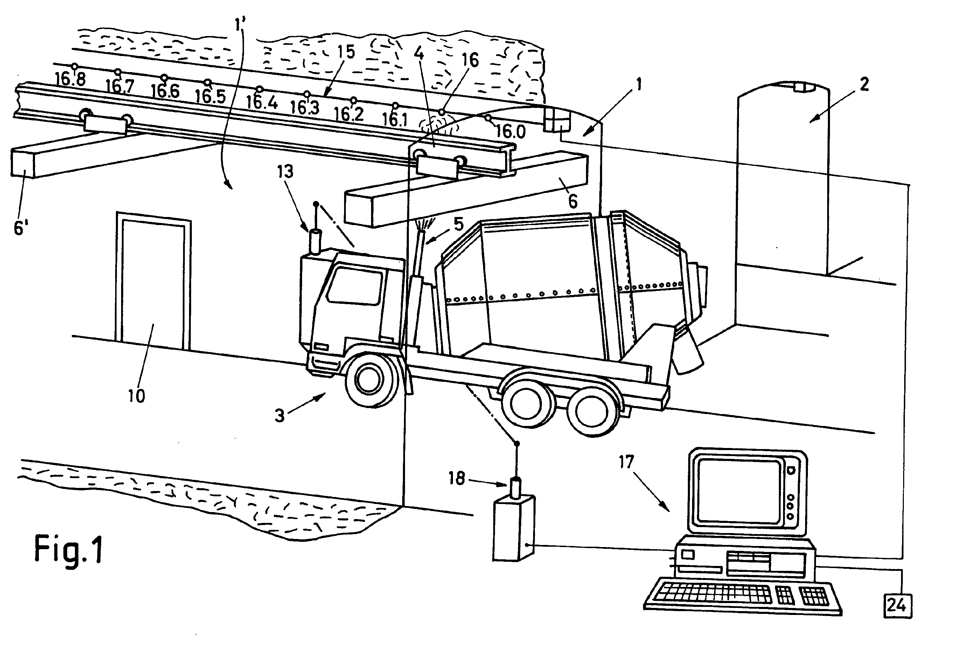

Gemäss Fig. 1 verlaufen zwei Tunnels 1 und 2 im wesentlichen parallel zueinander. Beide Tunnel 1, 2 können auf dieselbe Weise ausgerüstet werden, wie dies nachstehend unter Bezugnahme auf den (Haupt-)Tunnel 1 beschrieben wird, oder eine der erwähnten Alternativen aufweisen.

Statt den Tunnel 1 in einzelne Sektoren zu unterteilen, die im Brandfall jeweils durch fest angebrachte Abschotteinrichtungen abgeschottet werden können, ist mindestens eines von zwei Fahrsystemen vorgesehen, die zweckmässig jeweils mindestens ein an einer Innenwand des Tunnels 1 angebrachtes Trag- und Führungselement in Form einer Fahrschiene 4 aufweisen. Die Schiene 4 ist zum Fahren eines quer zur Tunnellängsachse erstreckenden Gehäusekastens 6 bzw. 6' vorgesehen, so dass die Brandstelle, nach den ersten Rettungsarbeiten zur Evakuierung von Personen, dicht abgeschlossen werden kann. Jeder Kasten 6, 6' beinhaltet einen gefalteten oder gerollten Rauchund/oder Feuerschutzvorhang etwa derjenigen Art, wie er im U.S. Patent Nr. 5,862,851 beschrieben ist.

Für den Brandfall ist es wichtig, dass nicht giftige Rauchgase in den Nachbartunnel 2 oder andere Nebenräume eindringen können. Anderseits soll der vom Brand nicht betroffene jeweilige Nachbartunnel für die Rettung von Personen benützt werden können. Deshalb ist erforderlich, wenn in Abständen angebrachte Verbindungsöffnungen, wie die dargestellte Öffnung 10 oder Nischen des Tunnels 1 abgeschottet werden können. Dies erfolgt im allgemeinen durch leicht betätigbare Drehtüren innerhalb der Öffnung 10.

Um die Feuerschutzeinheiten 6, 6' an den Brandherd heranzubringen, ist eine Positioniereinrichtung vorgesehen, die einfach von einer Reihe von entlang der seitlichen Begrenzungswand 1' des Tunnels 1 angebrachten Rufschaltern gebildet sein kann, mit denen beispielsweise ein Funksignal auslösbar ist, das von einer Antenne 13 bzw. einer Antenne 18 empfangen wird und ihr die gewünschte SOLL-Position wenigstens annähernd anzeigt.

Bei der Erfindung ist jedoch ein Computer 17 als Steuer- und Auswerteeinheit vorhanden, der entlang eines Sensorkabels 15 angeordnete Temperatursensoren 16.0, 16 und 16.1 bis 16.8 ständig bezüglich ihrer Messwerte abfrägt, wie dies an sich bekannt ist. Taucht ein aussergewöhnlich hoher Temperaturwert auf, so ist die Herkunft dieser Temperaturerhöhung durch den Computer leicht feststellbar, und es kann ein Alarm ausgelöst werden. Diese Temperaturmessungen können jedoch verfälscht sein, beispielsweise wenn ein Lastwagen 3 mit gegen die Sensoren 16.0, 16 und 16.1 bis 16.8 gerichtetem Auspuff 5 vorbeifährt.

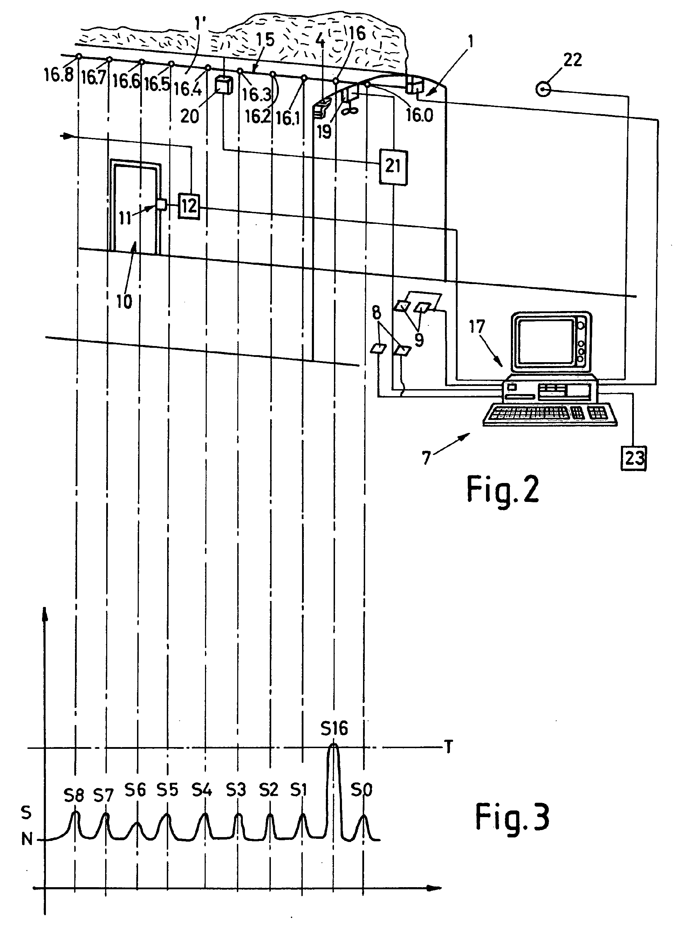

An Hand der Fig. 3 lässt sich ersehen, was geschieht, wenn - wie in Fig. 1 - der Auspuff 5 sich gerade unterhalb des Sensors 16 befindet. Während an allen anderen Sensoren im wesentlichen eine durchschnittliche, ihrer Umgebung entsprechende Temperatur gemessen wird (siehe die Signalspitzen S0 und S1 bis S8), bewirkt die Temperaturerhöhung durch die Auspuffgase des Lastkraftwagens 3 eine deutliche Erhöhung des Messwertes des Sensors 16 in Form einer Spitze S16, die dann beispielsweise bis oberhalb einer Toleranzgrenze T ragt und so für gewöhnlich einen (Fehl-)Alarm auslösen würde. Allerdings ist diese Störung bei fahrendem Kraftfahrzeug 3 nur von kurzzeitiger Dauer und wird dann beim nächsten Sensor 16.1 auftreten. Dagegen lassen sich im Rahmen der vorliegenden Erfindung wahlweise zwei Massnahmen treffen. Entweder es ist jedem Sensor 16.0, 16 und 16.1 bis 16.8 eine Integratorfunktion zugeordnet, die kurzzeitige Störungen absorbiert. Dies ist jedoch manchmal unerwünscht, weshalb auch der Computer 17 dazu herangezogen werden kann derlei von einem Sensor zum anderen wandernde Spitzen, wie die Spitze S16, als solche (beispielsweise mit einem Frequenzerkennungskreis) zu erkennen und eine Alarmauslösung zu unterbinden. Die Frequenz, mit der die Signalspitze S16 von einem Sensor zum anderen springt, ist ja von der Fahrgeschwindigkeit abhängig, die in einem Tunnel beispielsweise zwischen 60 und 90 km/h liegen wird. Allenfalls kann für eine bestimmte Anwendung die voraussichtliche Störfrequenz über das Tastenfeld 7 in den Computer 17 eingegeben werden. Damit lassen sich auch wandernde Messstörungen aus dem Ergebnis eliminieren, welche etwa in Eisenbahntunnels von einer von einem fahrenden Zug vor sich hergeschobenen Luftsäule herrühren, wie dies bei Autotunnels auch durch eine Anzahl von Kraftfahrzeugen vorkommen kann.

Normalerweise ist die Abfragefrequenz des Computers 17 an die Sensoren 16.0 bis 16.8 relativ hoch, so dass die von einem durch den Tunnel 1 fahrenden Kraftfahrzeug 3 verursachte wandernde Spitze S16 leicht erkannt werden kann. Unangenehm wird die Sache, wenn die Abfragefrequenz aus besonderen Gründen relativ niedrig gehalten wird und dann zufällig mit derjenigen übereinstimmt, mit der die Spitze 16 von einem Sensor zum anderen wandert. Dies müsste nämlich bei der Auswertung den Eindruck erwecken, die Temperatur sei flächendeckend im ganzen Tunnel zu hoch. Dem kann aber im Rahmen der Erfindung abgeholfen werden, indem die Abfragefrequenz des Computers 17 dann verändert wird, wenn an mindestens zwei hintereinandergelegenen Sensoren annähernd dieselbe Temperatur gemessen wird. Eine solche Veränderung in der Abfrage kann - bei an sich gleichbleibender Frequenz - auch so erfolgen, dass der Computer nochmals denselben Sensor abfrägt, zu welchem Zeitpunkt die Wanderstörung dort bereits vorüber sein sollte. Bei einem System nach der EP-A-1 031 954, deren Inhalt hier durch Bezugnahme als geoffenbart gelten soll, bei dem mindestens zwei Auswerte-Computer vorgesehen sind, kann in einem solchen Fall auch auf Abfrage durch den jeweils anderen Computer bzw. (auch bei nur einem Auswerte-Computer) auf Abfrage in einer Sequenz in umgekehrter Richtung umgeschaltet werden. Ebenso ist es denkbar, die Abfrage jeweils an den übernächsten Sensor zu adressieren, um so eine Pseudo-Frequenzverdoppelung zu schaffen.

Um das Auftreten einer solchen Wagenkolonne feststellen zu können, kann es auch vorteilhaft sein, an den Tunnelausgängen zählende Anwesenheitssensoren 8, 9 (Fig. 2) vorzusehen. Diese Anwesenheitssensoren könnten an sich von Lichtschranken, induktiven Schleifen oder dgl. gebildet sein, werden aber vorzugsweise so ausgebildet, wie dies in der EP-A-0 829 736 (Messung von Veränderungen des Erdmagnetfeldes) beschrieben ist. Auch diese Anwesenheitssensoren können einem doppelten Zweck dienen: Einerseits können damit Wagenkolonnen festgestellt werden, indem das Auftreten der "Objekte" in einen zeitlichen Zusammenhang gestellt wird. Das heisst, dass in kurzen Zeitabständen festgestellte Kraftwagen die Störgefahr einer vor ihnen hergeschobenen Luftsäule bedeuten und das Messergebnis - im Endeffekt - entsprechend zu korrigieren ist. Anderseits kann es auch vorteilhaft sein, mit dem Sensor 9 die einfahrenden und mit dem Sensor 8 (bzw. am anderen Ende des Tunnels durch einen dem Sensor 8 entsprechenden Sensor) die herausfahrenden Autos festzustellen und so im Brandfalle einen Überblick über die davon betroffene Anzahl von Kraftwagen zu gewinnen. Dies kann dazu führen, dass bei leerem Tunnel (analog dazu in einem Gebäude anderer Art) unmittelbar mit Abschottungsmassnahmen begonnen werden kann (Auslösung der Fahrt der Abschottkästen 6, 6' an den Brandort durch den Computer 17), wogegen andernfalls die Rettung von Personen Vorrang hat.

Eine weitere Störgrösse kann sich durch die in den Öffnungen 10 vorhandenen Türen ergeben. Wird eine von diesen etwa durch einen Strassenwärter geöffnet, so mag sich ein Luftzug ergeben, der das Signal S6 des jeweils nahegelegenen Sensors 16.6 absenkt, wie aus Fig. 3 zu ersehen ist. Vorteilhaft ist es deshalb, den Zustand (offen oder geschlossen) der Türe der Öffnung 10 mittels eines zugeordneten Positionssensors 11 (Fig. 2) zu überwachen. Da in einem Tunnel eine Vielzahl von in Abständen angeordneten solchen Türen vorgesehen sein wird, wird es vorteilhaft sein, die Informationen aus solchen der jeweiligen Türe zugeordneten Positionssensoren 11 in einer Misch- oder Zählschaltung 12 zusammenzufassen. In dieser Schaltung 12, wird die Anzahl der geöffneten Türen zusammengefasst (allenfalls auch deren Ortsadresse), um daraus die Grösse der möglichen Störung erkennen zu können und über eine Leitung 14 dem auswertenden Computer 17 mitzuteilen.

Ein Luftzug entlang des Tunnels 1 ergibt sich allerdings oft auch, ohne dass eine Türe geöffnet ist. Ein solcher Luftzug führt dann (bezugnehmend auf Fig. 3) dazu, dass nicht nur eine spezifische Messeinheit 16.6 eine - scheinbar - kühlere Temperatur (siehe die Spitze S6 in Fig. 3) feststellt, sondern eine ganze Reihe von Sensoren, gegebenenfalls sogar alle, eine geringere Temperatur anzeigt, als sie das ohne diesen Störeinfluss tun würde. Deshalb ist es günstig, mindestens einen Windmesser 19 (Fig. 2) vorzusehen, der die Kühlwirkung eines Luftstromes erfasst. Ein solcher Windmesser, gleichgültiger welcher Art und welchen Aufbaues, ist bevorzugt, weil damit gegebenenfalls auch der Luftzug aus einer offenen Türe ebenso erfasst werden kann, wie eine vor einer Reihe von Kraftfahrzeugen geschobene Luftsäule. Es sei hier erwähnt, dass natürlich die von einem Brand abgegebene Energie, wenigstens annähernd, gleich ist, ob nun ein Wind oder Luftzug vorliegt oder nicht. Aber einerseits kann durch einen solchen Wind mehr Sauerstoff an den Brandherd herangebracht werden, anderseits verändert sich das Messbild, welches der Computer 17 gewinnt. Bei Windstille steigt die Hitze auf und erfasst - in vollem Umfang - einen oder wenige einander benachbarte Sensoren 16. Bei einem Luftzug hingegen verteilt sich die Temperatur vom Brandherd in Richtung der Luftströmung weg über mehrere Sensoren. Wird im ersten Fall ein Brandalarm beispielsweise bei einem Temperaturunterschied gegenüber den anderen Sensoren 16 von etwa 20°K ausgelöst, so ist diese Schwelle je nach der Windgeschwindigkeit entsprechend verringern.

Dargestellt ist ein Windmesser 19 mit einer Luftschraube, doch sind auch elektronische Windmesser einsetzbar, die beispielsweise die Kühlwirkung des Luftzuges an einem auf eine bestimmte Temperatur geregelten Sensor, wie eine Diode, messen. Es kann auch vorteilhaft sein, mehrere solcher Windmesser vorzusehen, etwa über die ganze Länge des Tunnels verteilt. Bevorzugt sind die Messeinheiten für die Temperatur und den jeweils zweiten Wert über dasselbe Kabel 15 verteilt, weil dann der Computer 17 über nur einen Eingang beide Messdaten auszuwerten vermag, wobei sein Abfrageprogramm beispielsweise (bei alternierender Anordnung von Sensoren erster und zweiter Art) entweder zur alternierenden Abfrage oder in einem ersten Schritt zur Abfrage nur jedes Temperatursensors und dann jedes Sensors zweiter Art ausgebildet ist. In jedem Falle wird dann der Computer einen Zwischenspeicher 24 (Fig. 1) benötigen, um darin die Messergebnisse, beispielsweise über die Länge des Kabels 15, erst abzulegen und erst in einem zweiten Schritt miteinander zu verknüpfen. Ferner ist es vorteilhaft, wenn der (oder die) jeweilige Windsensor und sein Messergebnis auch dazu verwendet wird, etwa eine Lüftung oder andere Geräte zu steuern. In Fig. 2 ist der Computer 17 an ein Steuergerät 23 für die (nicht dargestellte) Tunnellüftung angeschlossen. Dieses Steuergerät 23 kann aber bei einer Ausbildung nach Fig. 1 auch an den Speicher 24 angeschlossen sein, weil es ja nur die Speicherplätze für die zur Steuerung herangezogenen Werte abfragen muss. Selbstverständlich sind auch andere Lösungen zur Abtrennung der Signale von Sensoren unterschiedlicher Art möglich, wie die Verwendung einer im Computer 17 vorgesehenen und von ihm gesteuerten Signalweiche, die Zuordnung von Kenncodes zu den unterschiedlichen Signalen oder die Verwendung unterschiedlicher Trägersignale (z.B. mit unterschiedlicher Frequenz, die zur Ausfilterung dienen mag).

Es ist allerdings nicht zu übersehen, dass die Kühlwirkung des Luftzuges auch von der Luftfeuchtigkeit abhängig ist bzw. die Luftfeuchtigkeit schon für sich eine Kühlwirkung ergeben kann, die das Messergebnis verfälschen mag. Deshalb ist es vorteilhaft, wenn auch (oder alleine) mindestens ein Feuchtigkeitsmesser 20, möglichst innerhalb des Tunnels 1, angeordnet wird. Die durch die Sensoren 19 bzw. 20 bestimmte Kühlwirkung kann jeweils für sich durch die Steuer- und Auswerteeinrichtung 17 berücksichtigt werden. Dies kann entweder so geschehen, dass der Unterschied zwischen dem unteren Normalniveau N (Fig. 3) zum Normalspitzenniveau S vergrössert wird, d.h. dass die Spitzen S0 bis S8 stärker aus dem Normalniveau herausragen. Dies kann so erfolgen, dass beispielsweise den von den Messeinheiten 16.0 bis 16.8 gemessenen Messwerten eine logarithmische oder exponentielle (oder jede andere vergrössernde Skala) zugrundegelegt wird. Alternativ oder zusätzlich kann aber auch die Toleranzgrenze T im Falle eines kühlenden Störfaktors abgesenkt werden.

Die kühlenden Störfaktoren Feuchtigkeit und Windgeschwindigkeit beeinflussen einander auch gegenseitig. Dies kann dadurch berücksichtigt werden, dass die Ausgänge der diesbezüglichen beiden Sensoren 19 und 20 zunächst in einer Verarbeitungsschaltung 21 zusammengefasst werden, wo sie unter Anwendung eines vorbestimmten Algorithmus miteinander kombiniert werden. Dies kann durchaus im Sinne der Errechnung des in den USA bekannten, sogenannten "Chill-Faktors" geschehen. Selbstverständlich kann die Schaltung in den Computer 17 integriert sein. Anderseits wäre es auch möglich, die einzelnen Sensoren 16.0 bis 16.8, statt sie in Serie entlang des Buskabels 15 zu schalten, sie in ähnlicher Weise wie die Sensoren 19 und 20 mit der Schaltung 21 parallel mit einzelnen sogenannten Gruppenseparatormodulen zu verbinden, wie dies in der EP-A-1 031 9564 vorgeschlagen worden ist.

Ein weiterer möglicher Störfaktor kann natürlich die Sonneneinstrahlung bzw. die jeweilige Tagestemperatur sein, die beispielsweise das Temperaturniveau der gesamten durch die Baulichkeit bzw. den Tunnel 1 strömende Luft beeinflusst. Um auch solche Störgrössen besser erfassen zu können, kann ein Aussentemperaturfühler 22 vorgesehen werden, durch den - in ähnlicher Weise wie bei den durch die Sensoren 19 und 20 gemessenen Kühlfaktoren - das Verhältnis zwischen dem Spitzenniveau S und der Toleranzgrenze T verändert werden kann.

Es versteht sich, dass im Rahmen der Erfindung zahlreiche Varianten möglich sind; beispielsweise braucht auch gar keine Toleranzgrenze T vorgesehen werden, wenn - was nicht bevorzugt ist - die Überwachung der Temperaturwerte etwa nur visuell erfolgt. Auch könnten für andere Zwecke andere Sensoren an Stelle der Temperatursensoren 16.0 bis 16.8 verwendet werden. Überdies wurde ja bereits darauf hingewiesen, dass die Erfindung auch für die Überwachung von Gebäuden sowie Fabriks- und Industrieanlagen einsetzbar ist. Ferner wäre es für manche Anwendungen denkbar, neben der oberen Toleranzgrenze T oder statt derselben eine untere Toleranzgrenze vorzusehen.

Ebenso wäre es denkbar, nur einen zählenden Anwesenheitssensor 8 oder 9 unter der Annahme vorzusehen, dass in den Tunnel 1 einfahrenden Fahrzeuge 3 normalerweise auch wieder herauskommen. Natürlich genügt ein einziger Anwesenheitssensor dann, wenn - wie etwa in Schienentunnels - nur eine einzige Fahrbahn in einer Richtung vorgesehen ist. Anderseits können auch in Längsrichtung jeweils mindestens zwei Anwesenheitssensoren vorgesehen sein (wie dies in Fig. 2 dargestellt ist), um aus der Abfolge ihres Ansprechens ein Richtungssignal zu erhalten. Diese hintereinanderliegenden Anwesenheitssensoren können dann mit einer auf- und abzählenden Rechenstufe verbunden werden, die aus der Differenz der eingehenden und ausgehenden "Objekte" die in der Baulichkeit verbliebenen Objekte errechnet.

### Bezugszeichenliste

- 1: (Haupt-)Tunnel mit Wand 1'
- 3: Lastkraftwagen
- 5: Auspuff
- 7: Tastenfeld v. 17
- 9: Anwesenheitssensor
- 11: Positionssensor
- 13: Antenne
- 15: Sensorkabel
- 17: Computer
- 19: Windmesser
- 21: Verarbeitungsschaltung
- 23: Steuereinheit f. Tunnellüftung
- 2: (Neben-)Tunnel
- 4: Fahrschiene
- 6, 6': Gehäusekasten
- 8: Anwesenheitssensor
- 10: Öffnung zw. 1 und 2
- 12: Misch- oder Zählschaltung
- 14: Leitung
- 16: Sensor
- 18: Antenne
- 20: Feuchtigkeitsmesser
- 22: Aussentemperaturfühler
- 24: Zwischenspeicher

## Patentansprüche

1. Verfahren zum Messen eines ersten Parameters an unterschiedlichen Orten mit Hilfe einer linearen Messanordnung (1), deren erste, einen ersten Parameter wiedergebenden Messignale (S.0-S.8) über einer gemeinsame Steuer- und Auswerteeinheit (17) auswertbar sind, **dadurch gekennzeichnet, dass** noch mindestens ein zweiter, brandunabhängiger und die Messbedingungen bzw. Auslösekriterien durch die ersten Messeinheiten (16.0-16.8) bzw. den Parameter am Ort der Messung selbst beeinflussender Parameter mit Ausnahme der blossen Anwesenheit von Objekten gemessen und mit den ersten Messignalen verknüpft wird.

2. Verfahren nach Anspruch 1, **dadurch gekennzeichnet, dass** als lineare Messanordnung eine entlang eines Kabels (1) angeordnete Vielzahl von untereinander verbundenen ersten Messeinheiten (16.0-16.8) verwendet wird.

3. Verfahren nach Anspruch 1 oder 2, **dadurch gekennzeichnet, dass** der zweite Parameter eine Feuchtigkeits- und/oder eine Luftgeschwindigkeitsinformation beinhaltet, und dass bevorzugt beide Informationen gewonnen und, gegebenenfalls über einen vorbestimmten Algorithmus miteinander verknüpft, für die Auswertung der Messwerte (S.O-S.8) der ersten Messeinheiten (16.0-16.8) herangezogen werden.

4. Verfahren nach einem der vorhergehenden Ansprüche, **dadurch gekennzeichnet, dass** als erster Parameter eine Temperatur gemessen wird, und dass als zweiter Parameter der Zustand einer Störquelle, beispielsweise deren Temperatur, bestimmt wird.

5. Verfahren nach einem der vorhergehenden Ansprüche, **dadurch gekennzeichnet, dass** den ersten Messignalen (S.0-S.8) mindestens eine Toleranzgrenze (T) zugeordnet wird, und dass das Verhältnis der ersten Messignale (S.0-S.8) zur Toleranzgrenze (T) von der Messung des zweiten Parameters bestimmt wird.

6. Messanordnung zur Durchführung des Verfahrens nach einem der vorhergehenden Ansprüche, mit einer linearen Meßanordnung (1), insbesondere einer Vielzahl von untereinander verbundenen ersten Messeinheiten (16.0-16.8), deren erste, einen ersten Parameter wiedergebenden Messignale (S.0-S.8) einer gemeinsamen Steuer- und Auswerteeinheit (17) zuführbar sind, **dadurch gekennzeichnet, dass** mindestens eine zweite Messeinheit (8, 9, 11, 19, 20, 22) zur Bestimmung eines zweiten, brandunabhängigen und die Messbedingungen bzw. Auslösekriterien durch die ersten Messeinheiten (16.0-16.8) bzw. den Parameter am Ort der Messung selbst beeinflussenden Parameters mit der Steuer- und Auswerteeinheit (17) verknüpft ist.

7. Messanordnung nach Anspruch 6, **dadurch gekennzeichnet, dass** die zweite Messeinheit (8, 9, 11, 19, 20, 22) einen Feuchtigkeits- (20) und/oder einen Luftgeschwindigkeitssensor (19) umfasst, und dass vorzugsweise die Steuer- und Auswerteeinheit (17) auch eine Verknüpfung (23) der Information des Feuchtigkeits- (20) und/oder Luftgeschwindigkeitssensors (19) zum Steuern einer weiteren Einrichtung, insbesondere einer Lüftungseinrichtung, aufweist.

8. Messanordnung nach Anspruch 6 oder 7, **dadurch gekennzeichnet, dass** die zweite Messeinheit (8, 9, 11, 19, 20, 22) mindestens einen zählenden Anwesenheitssensor (8, 9) umfasst, und dass vorzugsweise durch den zählenden Anwesenheitssensor (8, 9) eine Charakteristik der Messanordnung in Abhängigkeit von der Anzahl anwesender Objekte veränderbar ist.

9. Messanordnung nach einem der Ansprüche 6 bis 8, **dadurch gekennzeichnet, dass** die ersten Messeinheiten (16.0-16.8) von Temperatursensoren gebildet sind und die zweite Messeinheit (8, 9, 11, 19, 20, 22) einen Zustandssensor (11, 22) für den Zustand einer Störquelle, beispielsweise einen weiteren Temperatursensor (22) zum Erfassen der Temperatur dieser Störquelle, aufweist.

10. Messanordnung nach einem der Ansprüche 6 bis 9, **dadurch gekennzeichnet, dass** die Messeinheiten (8, 9, 11, 16.0-16.8, 19, 20, 22) für den ersten und den zweiten Parameter an derselben linearen Messanordnung (1) angeordnet sind.
